(19) Europäisches Patentamt / European Patent Office / Office européen des brevets

(11) **EP 2 224 425 B1**

(12) **EUROPEAN PATENT SPECIFICATION**

(45) Date of publication and mention
of the grant of the patent:
**08.02.2012  Bulletin 2012/06**

(51) Int Cl.:
**G10L 11/00** *(2006.01)*     **B25J 13/00** *(2006.01)*

(21) Application number: **09153712.6**

(22) Date of filing: **26.02.2009**

(54) **An audio signal processing system and autonomous robot having such system**

Audiosignalverarbeitungssystem und autonomer Roboter mit dem System

Système de traitement de signal audio et robot autonome doté d'un tel système

(84) Designated Contracting States:
**DE FR GB**

(43) Date of publication of application:
**01.09.2010  Bulletin 2010/35**

(73) Proprietor: **Honda Research Institute Europe GmbH**
**63073 Offenbach/Main (DE)**

(72) Inventor: **Rodemann, Tobias**
**63065, Offenbach (DE)**

(74) Representative: **Rupp, Christian et al**
**Mitscherlich & Partner**
**Patent- und Rechtsanwälte**
**Sonnenstraße 33**
**80331 München (DE)**

(56) References cited:
• **GHAEMMAGHAMI S: "Audio segmentation and classification based on a selective analysis scheme" MULTIMEDIA MODELLING CONFERENCE, 2004. PROCEEDINGS. 10TH INTERNATIONAL 5-7 JAN. 2004, PISCATAWAY, NJ, USA,IEEE, 5 January 2004 (2004-01-05), pages 42-48, XP010681781 ISBN: 978-0-7695-2084-1**
• **BOLDER B ET AL: "Visually Guided Whole Body Interaction" ROBOTICS AND AUTOMATION, 2007 IEEE INTERNATIONAL CONFERENCE ON, IEEE, PI, 10 April 2007 (2007-04-10), pages 3054-3061, XP031389261 ISBN: 978-1-4244-0601-2**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of invention:**

The present invention relates to a system that is provided with audio signal sensing means and which processes the sensed audio signals to modify its behavior. Audio signals are transformed through a process that consists of audio feature computation, segmentation, feature integration and compression over the segment into audio proto objects that provide a coarse, manageable representation of audio signals that is suited for behavior control. The audio proto objects are then analyzed in different processing stages consisting of e.g. filtering and grouping to define an appropriate behavior.

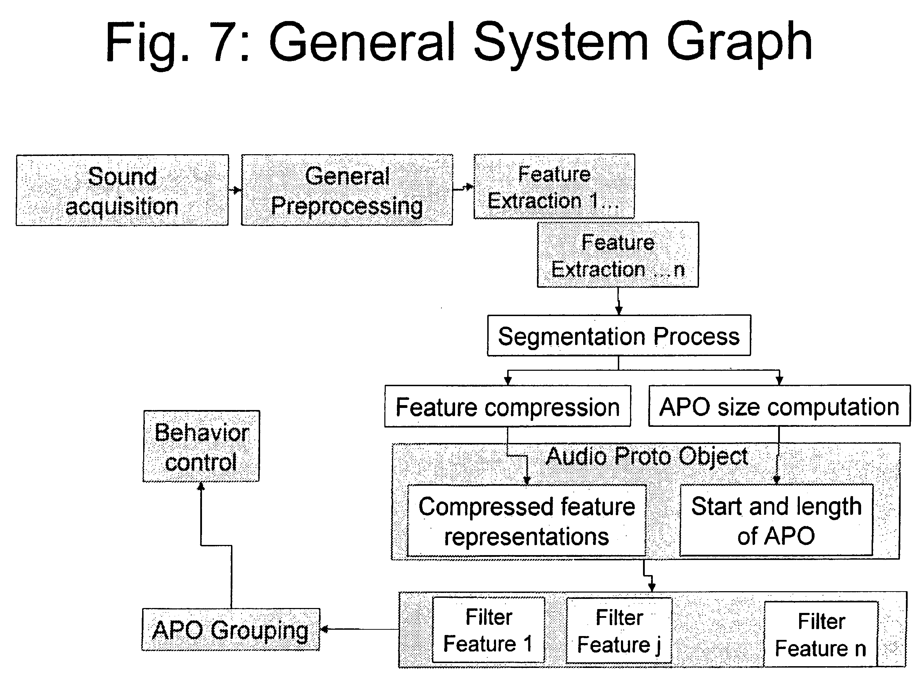

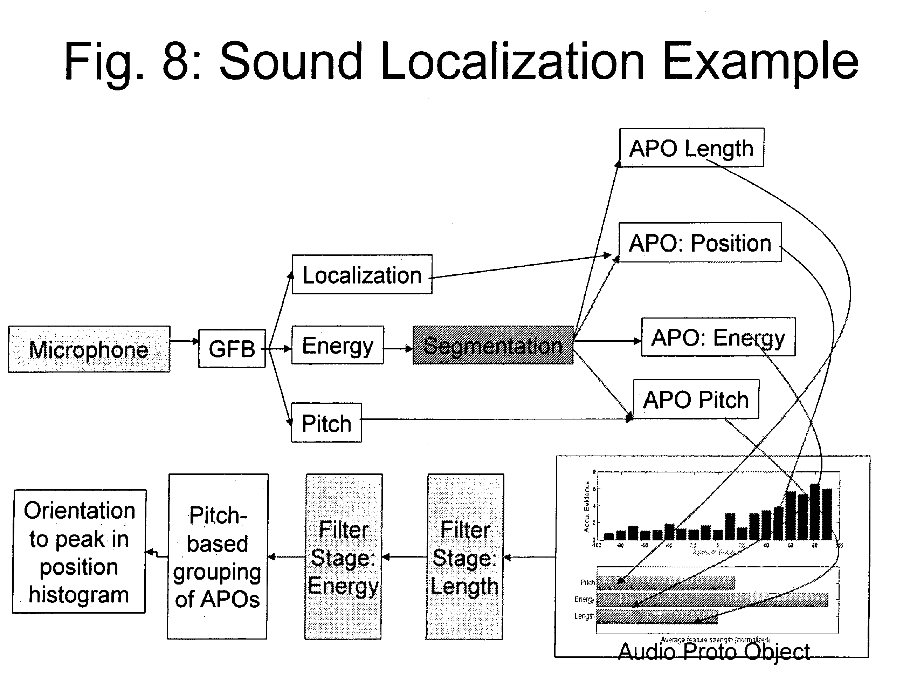

The outline of the proposed system is visualized in Fig. 7. A specific system implementation is depicted in Fig. 8.

**Definition of Audio Proto Object:**

An Audio Proto Object (short form: APO) is an entity (i.e. a data object) that contains, as a higher level representation of an audio signal, a collection of condensed audio features for a specific audio segment plus information about the segment itself. A segment is a span in time (when representing in the time domain) or an area in the frequency/time space (i.e. when representing an audio signal in the frequency space. Audio proto objects have a fixed size independent of the size of the original segment and contain information about the audio segment behaviorally relevant for the system processing the audio signals. An example can be found in S. Ghaemmaghami, "Audio segmentation and classification based on a selective analysis scheme" Proceedings 10th International Multimedia Modelling Conference, 2004, pages 42-48.

**Background:**

This invention is situated in the area of systems for sound processing under real-world conditions [1], e.g. on a robot system. Under these conditions the audio signals recorded by microphones are the sum of many different sound sources and the echoes generated by reflections from walls, ceiling, furniture etc.

The basic, low-level representations of audio signals are unsuited for robotics since it is difficult to directly link audio signals to the proper behavior ("behavior" in the framework being an action or an environmental analysis carried out by e.g. the robot in response to having sensed and processed an audio signal). The invention therefore proposes a method for transforming audio signals into a higher-level representation that is better suited for robotics applications. The proposed system can be implemented, for example, in a robot that is supposed to orient (its head, sensors, movement,...) to relevant audio sources like human speakers.

There are a number of examples for audio sensory signals that are used to direct a robotic system's behavior. The first class of behaviors is a response of the robot to the audio signal by a physical action, such as:

-    Orientation to a sound source's position.
-    Entering into a communication with a sound source (a speaker), etc.

The second class of behaviors is a response of the robot to the audio signal by an environmental analysis, which will in turn lead to a modified physical action of the robot in the future:

-    evaluation of environmental sounds (e.g. collision),
-    understanding of communication situations (who is communicating with whom).

These scenarios require a number of auditory processing capabilities that go beyond speech recognition or speaker identification, the standard applications of audio processing. These auditory processing capabilities are among others:

sound localization, ignoring behaviorally irrelevant sounds, identifying the sources behind the acquired sounds, analysis of timing and rhythm in dialogue situations.

While speech recognition requires a representation of audio signals that still carries a substantial part of the raw audio information, especially sequence information, many of the above described tasks in robot audition can work sufficiently on more compressed representation of sounds.

**Object of the present invention:**

It is the object of the present invention to propose a higher level audio signal processing and representation allowing e.g. a robot to adapt its behavior in response to a sensed audio signal.

The proposed solution of the invention comprises audio proto objects according to the invention are using this to provide a smaller representation of audio signals on which behavior selection is easier to perform.

The object is generally achieved by means of the features of the independent claims. The dependent claims develop further the central idea of the present invention.

According to a first aspect of the invention an audio signal processing system comprises:

a) one or more sensors for sensing audio signals,
b.) a module for computing audio signal segments of coherent signal elements,
c.) at least one compressing module for computing a compressed representation of audio features of each audio signal segment, and
d.) a module for storing audio proto objects, which are data objects comprising the compressed representation and time information of the associated audio signal segment, wherein the at least one compressing module is designed to perform an integration of said audio features over time via a leaky integration so that later samples of the segment have a higher influence on the compressed features in the audio proto object than earlier samples.

The audio proto objects are preferably designed to all have the same data size independently of the length of the segment represented by the audio proto object.

The system may be designed to group and store in context audio proto objects with similar features.

The segment computing module may perform the segmentation based on at least one of audio cues like signal energy, and grouping areas with homogeneous audio feature values.

The segment computing module may perform the segmentation in the time domain or the spectral domain of the sensed audio signals.

The compressing module(s) may use one or more of the following audio features:

pitch, formants, binaural or spectral localization cues, RASTA features, HIST features, signal energy.

Visual proto objects, generated on the basis of visual sensing, may be stored together with the audio proto objects. Audio and visual features that are common (like position) or linked (like visual size and pitch) can be integrated. Integration means that a mapping can be learned and used that predicts one sensory feature based on input from the other sensory modality. This mapping is likely to be probability-based. The resulting prediction can then be combined with the direct measurement.

A further aspect of the invention relates to a robot, having an audio signal processing system as defined above, wherein the robot further more is provided with a computing unit which controls the robot's behavior based on the stored audio proto objects.

Further advantages, features and objects will become evident for the skilled person when reading the following description of preferred embodiments when taken in conjunction with the figures of the enclosed drawings.

- Figure 1: Audio signal in time domain,

- Figure 2: Audio signal in spectro-temporal domain,

- Figure 3: Segmentation process 1D,

- Figure 4: Segmentation process 2D,

- Figure 5: Position features in Audio Proto Object,

- Figure 6: Signal energy over time in Audio Proto Object - different compression methods,

- Figure 7: Sketch of general system architecture, and

- Figure 8: System graph for sound localization example

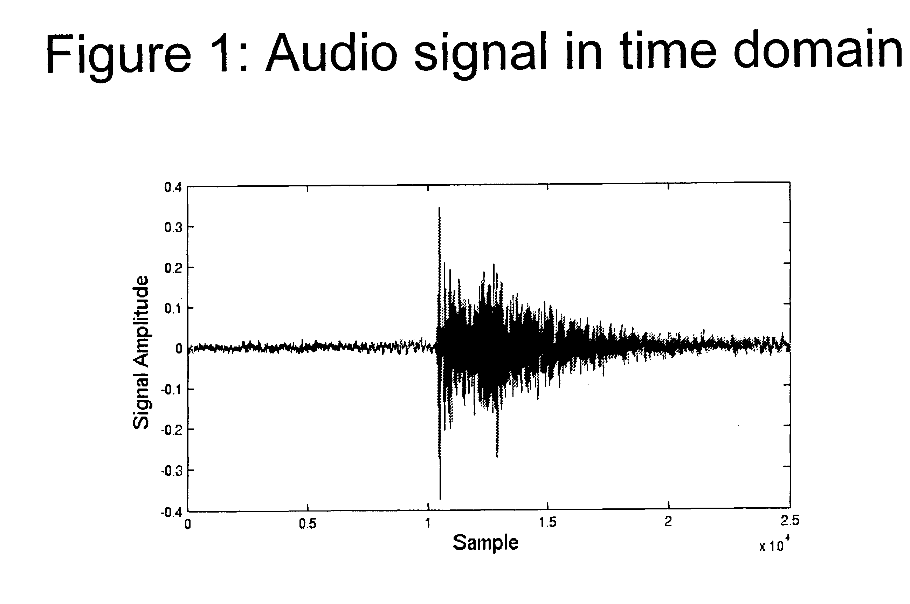

Figure 1 shows an audio signal in time representation. Audio data is generally sensed and then digitally recorded at specific sampling rates, e.g. 16 kHz (see Fig. 1 as an example of a digitally recorded signal). Each measurement will be called a sample in this document. Individual measurements, i.e. single samples, are often too noisy to work on. It is therefore a standard approach to average over many samples to get a stable and reliable result.

Another commonly used approach in audio processing is to perform a frequency analysis of the signal. That means that the 1-dimensional time signal is converted into its frequency components. This is normally done using the standard (Fast) Fourier transformation (FFT or FT), or so called Gammatone Filter Banks (GFBs) [9].

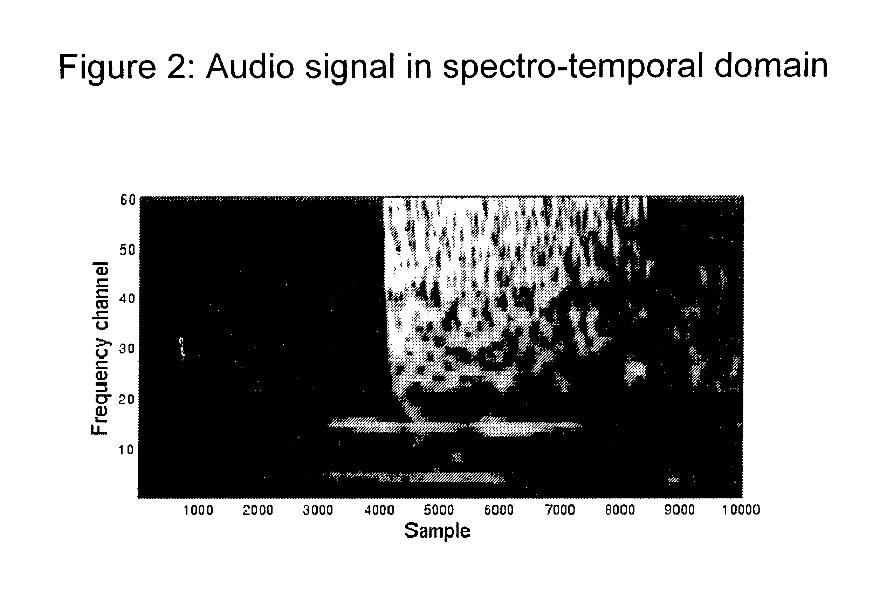

Fig. 2 shows an example of an audio signal in spectro-temporal representation. This figure shows the same signal as in Fig. 1, but after application of a Gammatone Filterbank and envelope extraction. Channel number 1 corresponds to a frequency of 100 Hz, channel 60 to 2000 Hz for an example of an audio signal represented in the frequency/time space.

The benefit of this frequency analysis approach is that some forms of analysis are easier in frequency space. It is also likely that different sources are using different frequency bands, making separation easier in the frequency representation.

Several approaches exist to solve the superposition problem, that is to separate different sound sources in the microphone signal via approaches like Blind Source Separation (BSS) or beam-forming [10].

Bregman [3] presented an approach, called Auditory Scene Analysis (see also [2]), where a collection of audio features (localization features, pitch, formants, signal energy, etc.) is computed and based on these features a separation of signals over time and/or frequency is performed.

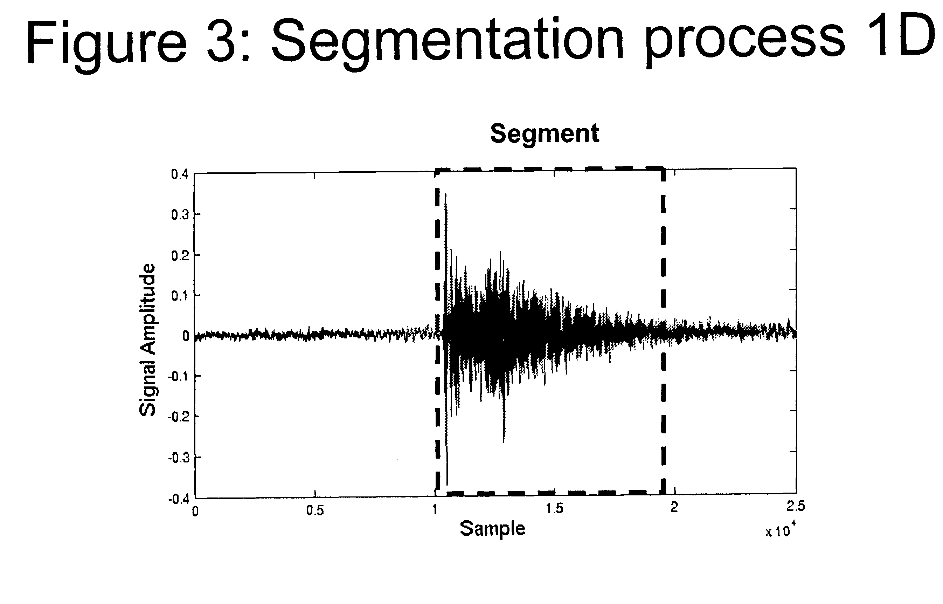

Figure 3 shows a Segmentation process 1D : The segment is defined by looking at signal envelopes in time representation.

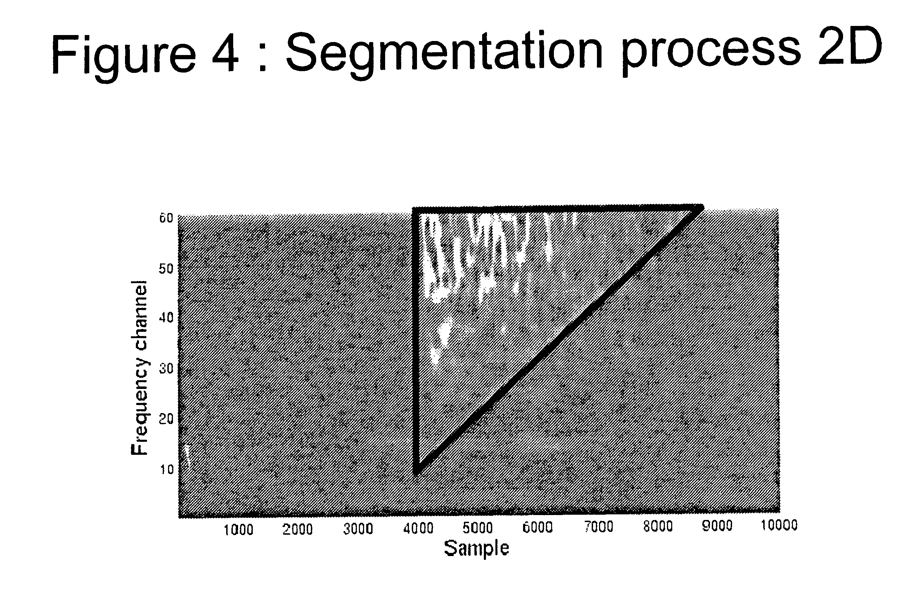

The separation of segments is based on either a homogeneity (grouping samples with similar feature values together) or difference analysis (defining borders where feature values change rapidly). The result is a segment, a span in time (for 1D signals, see Fig. 3) or an area in frequency/time space (Fig. 4), which was identified as belonging to the same basic sound element. Figure 4 shows a segmentation process in 2D: The segment is defined by grouping spectro-temporal elements of similar energy.

This segment is commonly called an auditory stream. Auditory streams are often forwarded to speech recognition modules which require a clear, separated audio signal. Audio streams are still low-level elements, close to the signal level. The description of a stream is the collection of all features in the segment. For segments of different length the feature representations vary in size which makes it difficult to compare audio streams of different size. Furthermore the representation is not well suited for integration with visual input or behavior control, since most of the detailed information in audio streams is unnecessary for behavior control.

The invention proposes to use audio proto objects as a high-level representation of audio data, the audio proto objects being data objects assembled by assigning compressed and normalized feature values to the segment.

The notation audio proto object (APO) was chosen because not all APOs correspond to semantic objects like syllables, words, or isolated natural sounds like the sound of dripping water. Rather, they will often represent parts or combinations of those sounds.

The features associated with an APO are simple ones like the timing (e.g. start time and length) plus representative values of features for all samples within the segment. Representative values can be generated via a simple averaging process (e.g. arithmetic mean pitch value over all samples), a histogram of values, a population code representation [11], or other methods which provide a fixed length, low-dimensional representation of the segment.

The resulting APO is an easy to use handle to a collection of features that describe the specific audio segment

**State-of-art limitations:**

The standard sample-wise processing does not allow an easy integration of single measurements over time or frequency channels because different sample measurements not necessarily belong to the same sound source. Because individual samples show a high variability in their features, the resulting analysis is unreliable. A standard solution is a temporal integration over short periods of time, e.g. via low-pass filtering. This approach is clearly limited especially in scenarios with multiple alternating sound sources or quickly changing features (e.g. position for a moving object).

When audio processing has to be connected to other sensory modalities or behavior control (for example in robotics), different representations are often required. When we consider a typical scenario - sound localization [4] - we see the limits of standard approaches. There will be a continuous estimation of the position of the sound source (to which the robot orients its head to), but the system can't decide how many sources are active and what their audio characteristics are. It is therefore difficult to decide if the current sound is relevant for the robot and there is also the danger that sounds from different sources are merged thereby spoiling sound localization.

**Detailed description of an embodiment of the present invention:**

In an initial stage a segmentation process defines an area in time-frequency space that is considered to result from a common origin or sound source. Segmentation is a standard process that can be based on differences in some audio feature (e.g. changes in estimated position) or homogeneity of feature values over several samples and frequencies. An example of a simple segmentation process is a signal energy-based segmentation (Fig. 3).

All time-frequency elements, grouped together by the segmentation process, form the raw data of the audio proto object. The next is step is a compression of features to a lower-dimensional representation - this can be done e.g. via an averaging of feature values or more advanced methods.

In order to be able to handle and compare audio proto objects, it is proposed that these representations have a fixed size, i.e. the representation of a specific feature has the same dimensionality for all audio proto objects.

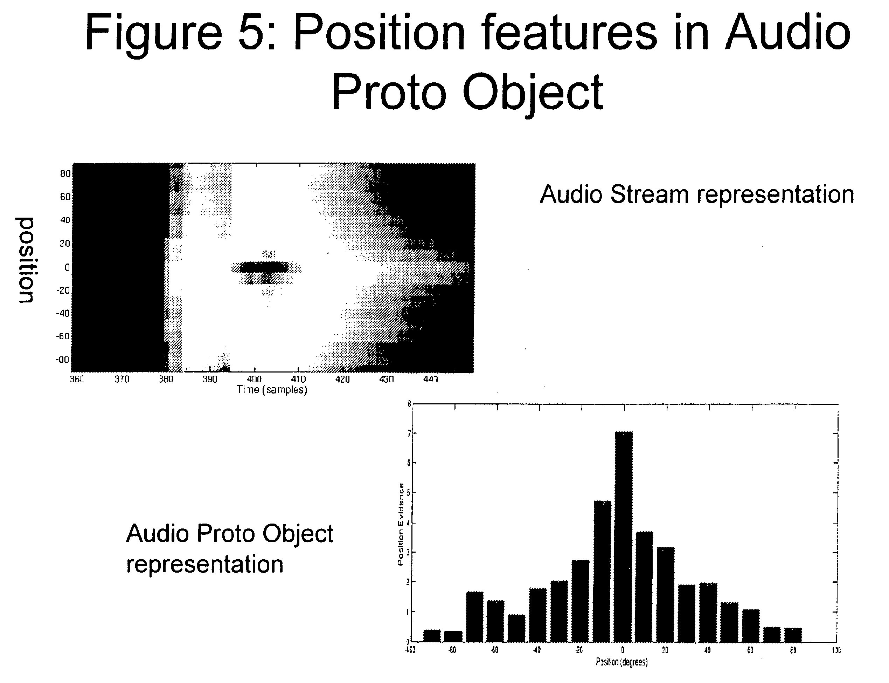

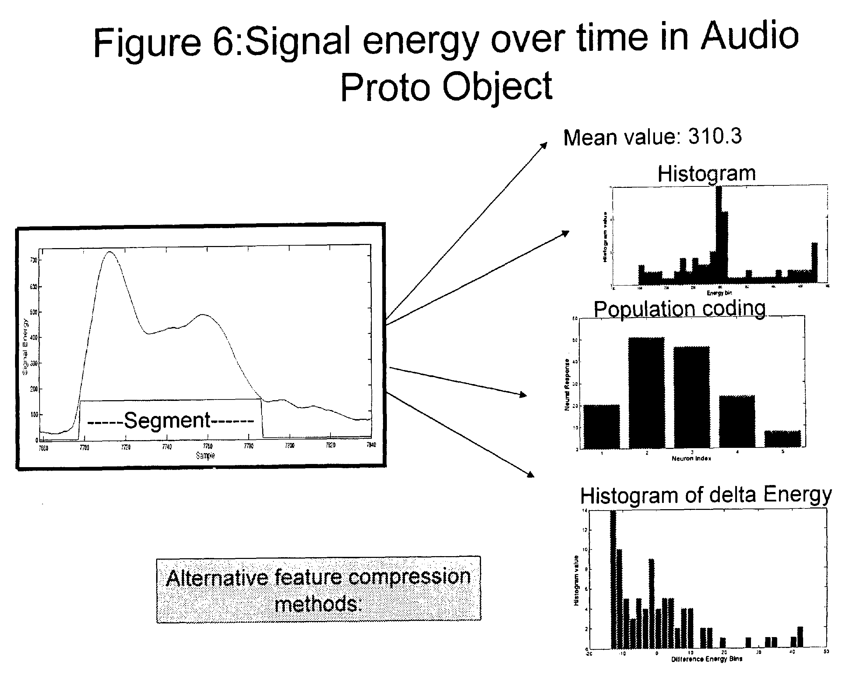

The result is a reduced representation of audio features in the segmented time-frequency region (Figs. 5,6). Figure 5 shows localization information in stream and audio proto object form. This figure shows the computed localization information as position evidence for different positions (azimuth angles). The standard approach is depicted on the upper left, where position evidence is computed for every sample, while in the audio proto object concept (lower right) the information is integrated over all samples. For most applications this reduced representation is sufficient to guide behavior and much more condensed.

Figure 6 shows the signal energy over time for proto object: This figure shows different ways for converting audio features (here signal energy, left plot) to compressed representations. The borders of the segment are marked. The first option for feature compression is a simple mean of energy values over the segment (top right). The second (right, second from top) shows a histogram representation that provides additional information about the distribution of energy values. Similar to the histogram is the representation as a population code (second from bottom, right), which has the added benefit of a variable distribution of bin centers and overlapping responses, i.e. one specific feature value is encoded by several nodes of the population. The bottom plot on the right depicts a representation of derivative feature values. It is the histogram of the temporal derivative of signal energy. In this specific instance it can be seen that there are more samples with a negative energy slope than with a positive one, i.e. the signal energy decays over time.

Example features are segment length, signal energy, position estimation, pitch [4], formants [17], or low-level features like Interaural Time Difference ITD, Interaural Intensity Difference IID [2], RASTA[7] , HIST [6] (Hierarchical Spectre-Temporal Features), etc.

Suitable compressed representations of audio features are averaged values over all samples (like mean pitch within a segment, average signal energy) or more extensive methods like feature histograms or population codes [11]. Histograms represent features values in a segment by storing the relative or absolute frequency of occurrence of a certain feature value. Histograms allow a representation of the distribution of feature values in the segment, with the advantage of a fixed length of the representation. Similar to histograms is the concept of population codes that is derived from coding principles in the brain [11]. In this approach a certain feature is encoded by a set of elements (neurons) that respond to a specific feature value each. When different feature values are presented (sequentially or in parallel), they activate different neurons. This allows a representation of many different feature values in a limited set of neurons.

Since these compression methods remove sequence information (the order of feature values is not represented), the invention proposes to include derivative features (first or higher order derivatives in time or frequency) to retain some of the sequence information.

In some cases it can make sense to integrate audio features with an uneven weighting of samples. Since more recent events are often more relevant for behavior than earlier ones we propose to use a leaky integration of audio features. In a leaky integration, the features values for different samples are added up, but activity also decays over time. The result is that the feature response initially increases (almost linearly) so that longer segments produce a higher response. At some point, given constant feature values, the activity saturates. When feature values change over time, the activity is a weighted mean of samples in the segment with a weight that is the lower the further the sample is in the past. This tends to emphasise the role of the final part of the segment. This approach makes sense for example when computing the compressed representation of signal energy (related to loudness), for which it was shown that for human hearing it increases with segment length but saturates after about one second. The higher weighting of the final part of the segment might make sense when analyzing changes in pitch, since the change in pitch near the end of a phrase is an important cue for determining whether the phrase is a question or a statement. For a feature f the leaky integration to compute the compressed feature P can be performed iteratively as:

$$P(t) = \alpha * P(t-1) + (1-\alpha) * f(t); P(t0) = 0$$

The desired compressed feature value is $P(t=t_1)$, where $t_1$ is the end of the segment. The process is initiated with $P(t=t_0) = 0$ and starts at the beginning of the segment (at $t = t_0$). The parameter $\alpha$ defines the time constant of temporal integration.

When auditory signals have been transformed into auditory proto objects the further handling of these signals becomes easier. As an example take the orientation of a robot's head towards the sound source. Assuming that sound source position is one of the extracted features in the proto object, the audio proto objects are a suitable representation of audio data for behavior or motor control. In certain situations it is desired to limit orienting motions of the robot to certain types of audio signals (e.g. only respond to speech or signals with a minimum length). Then compressed feature values in the audio proto objects often provide the necessary information to decide if the specific signal is to be attended to or not. In some cases a simple threshold filtering (e.g. length > threshold) is sufficient to select relevant APOs, in other cases the full set of proto object features has to be analyzed to make the decision.

Since APOs have a compressed feature representation, many APOs can be kept in memory. Therefore audio proto objects are a natural building block of audio scene memories. It is also possible to compare and combine different audio proto objects in scene memory when their features (e.g. timing) indicate a common sound source. Based on this grouping of APOs it is possible to determine sequences and rhythms of these proto objects or sound sources, which can act as additional audio features.

In vision, a similar concept of visual proto objects was recently proposed [8,16], based on psychological data [13,14,15]. While segmentation processes and features are different, there exists a possibility to have a simple integration of visual and audio proto objects. The position of a sound generating object is the same in the audio and visual domain. Therefore it is a common approach in the literature to combine the two modalities [12], albeit no proto object concept is used. Since the integration operates on a rather low-level (raw position estimations in both modalities) it is a substantial problem to know if for a given pair of audio and visual signal there is a common source. The proto object concept provides a solution to this problem: It is possible to learn the relation between visual and audio features. Then, if those features match for a pair of proto objects, the proto objects can be assigned to the same source and the localization estimation of the two proto objects can be integrated.

Based on the audio proto object concept it is also possible to measure audio features and then predict the features of the visual proto object ('search for an object that could have generated this sound').

With the audio proto object concept it is possible, assuming a correct segmentation, to separate different sound sources, extract their characteristics like position or mean pitch, and react to the sound depending on its features. We could, for example, analyze the audio proto object's mean pitch and if it is in the correct range, orient the head towards the measured position (which is also stored in the proto object).

When one looks at the timing of audio proto objects and groups of similar proto objects (those which likely result from the same source) a rhythm of timing might appear. Computing this rhythm allows the prediction of the next occurrence of a proto object. In a slight modification we can also analyze the timing of consecutive proto objects from different sources (e.g. in a dialogue) and predict which audio source is going to be active next and when. The prediction can support feature measurements and later grouping processes.

Measuring deviations from those predictions can be used to detect changes in the scene, e.g. when a communication between two people is extended to a three-people communication and therefore speaker rhythms change.

**Difference to Bregman's concept of audio streams:**

In contrast to Bregman's audio streams which are designed to provide perfectly separated audio signals still containing the full detailed information the invention proposes to condense the information to a level that can be handled in robotics applications, especially for behavior selection. Audio proto objects are smaller and of fixed size, thus allowing a direct comparison of different audio proto objects. We propose to use the audio proto objects as basic elements of a scene representation, and for interaction with other modalities like vision.

*Summary:*

- APOs use compressed feature values
- APOs have a fixed size independent of segment size

**Difference to concepts of visual proto objects:**

Visual proto objects are similar in their target - to generate a compact, intermediate representation for action selection and scene representation. The segmentation process and the features are however totally different. The proposed concepts for visual proto objects also contain a very low-level representation comparable to Bregman's audio streams.

Figure 7 shows schematically a system graph for audio proto objects-based behavior selection. After sound acquisition (e.g. using a set of microphones) and an optional general preprocessing stage (e.g. to use a GFB) a number of n audio features are computed. Using one or more audio features the segmentation process is applied which provides segment borders.

Based on the segment information compressed representations for all audio features are computed. A variety of methods can be used, even different methods for different cues are possible. The basic requirement is that the compressed features have a size that is invariant of the segment. In addition to compressed feature values, additional timing information is computed (start and stop time of segment, or start time and length). The previous processing stage defines the audio proto objects. Next, a number of filtering modules is applied that analyses audio proto object features individually or in combination to decide if audio proto objects are passed on. After the filtering modules there is an optional stage that can group different proto objects with similar values together. Finally, behavior selection evaluates the remaining audio proto objects and performs a corresponding action.

**Example of an implementation:**

Figure 8 shows schematically the signal processing flow in a selective sound localization with audio proto objects, thus giving an example of an application of the audio proto object system for selective orientation to the position of a sound source.

After sound acquisition a Gammatone Filterbank is applied. The resulting signal is used to compute signal energy, pitch, and position estimation. The signal energy was chosen to define segment borders. Here a simple approach is chosen: the segment starts when the energy exceeds a specific threshold and ends then energy falls below the threshold.

Then the length of the segment (difference between start and end time of the audio proto object), the arithmetic mean of pitch and signal energy, and the accumulated evidence for all positions are computed. The result is an audio proto object, an example of which is depicted in the lower right corner. Two filtering modules only pass on audio proto objects, for which length and mean energy exceed a defined threshold.

In an optional step audio proto objects with a similar mean pitch can be grouped and their feature values averaged. Finally, the system (e.g. a robot) will orient towards the position of the sound source, by searching for the position with the highest evidence (80 deg in the example) and turn its head (being provided with sensors) towards this position.

In Figure 8 one specific realization of the audio proto object system is visualized. Sound signals are recorded using one or more microphones (at least for sound localization). Afterwards, a Gammatone Filterbank (GFB) is used to perform a frequency decomposition of the signal. Based on the resulting signal a number of processing modules are fed. The sound localization module analyses the signals from at least two microphones and provides sample-wise position estimations in the form of evidence values for certain positions (here the frontal horizontal range between 90 and -90 degrees azimuth angle is used, resulting in a diagram as shown in the lower graph of figure 5). Also based on the GFB signal the signal's pitch is computed. Also based on either the GFB or the raw microphone signal the sample-wise signal energy is computed.

The energy is used as the segmentation cue, i.e. the segmentation is performed based on the energy per sample computation. A segment (time span segment in this example) is started (at time to) when a pre-specified energy start-threshold $\Theta_{Start}$ is exceeded and ends (at time $t_1$) when the energy falls below the stop-threshold $\Theta_{stop}$. Note that the two threshold values can be chosen identically. The length (time duration) of the audio proto object is computed as the time (or number of samples) between start and stop of the segment ($L = t_1 - t_0$).

The audio proto object is now initiated and feature values are averaged over the full segment. The length of the APO, the mean energy and mean pitch over all samples in the segment are computed, and then the position evidence for all positions during the whole segment are added up. The resulting values are stored in the audio proto object.

Then the audio proto objects are processed in a number of filtering stages, where proto object values are analyzed and only those audio proto objects with the correct values (i.e. values exceeding threshold values of preset criteria) are passed to the next processing stage. As a specific example all audio proto objects are discarded which are not long and loud (i.e. high energy) enough. In many real-world scenarios this can for example be used to filter out background noise and short environmental sounds like mouse-clicks.

The remaining validated proto objects can now be assigned to different sound sources (e.g. speakers) depending on their position and their pitch. If all audio proto objects with a similar position and pitch are averaged, the system can get an improved estimation of position and mean pitch of different sound sources (e.g. a male and female speaker at different positions). Finally the system can decide to orient to one of the audio proto objects stored in a memory, e.g. by searching for one with a specific pitch and using the integrated position estimation to guide the robot's motions.

**Prior art:**

1.) Jens Blauert, Spatial Hearing, Press, Cambridge, MA, 1997

2.) DeLiang Wang and Guy J. Brown, Computational auditory scene analysis, IEEE Press, Wiley & Sons, 2006

3.) Albert S. Bregman. Auditory scene analysis, MIT Press, Cambridge, MA, 1990

4.) T. Rodemann, M. Heckmann, B. Schoelling, F. Joublin, C. Goerick , "Real-time sound localization with a binaural head-system using a biologically-inspired cue-triple mapping", in Proceedings of the International Conference on Intelligent Robots and Systems, IROS 2006.

5.) M. Heckmann, F. Joublin, and C. Goerick, "Combining rate and place information for robust pitch extraction", in Proceedings INTERSPEECH 2007, ISCA 2007, pp. 2765-2768

6.) M. Heckmann, X. Domont, F. Joublin, C. Goerick, "A Closer Look on Hierarchical Spectro-Temporal Features (HIST)", in Proceedings INTERSPEECH 2008, ISCA, Brisbane, Australia, 2008

7.) H. Hermansky and N. Morgan, "Rasta processing of speech", IEEE Trans. Speech and Audio Proc, vol. 2, no. 4, pp 578-589, 1994

8.) B. Bolder, M. Dunn, M. Gienger, H. Janssen, H. Sugiura, C. Goerick,"Visually Guided Whole Body Interaction", Proceedings of IEEE Conference on Robotics and Automation (ICRA), 2007

9.) M. Slaney, "An efficient implementation of the Patterson-Holdsworth auditory filterbank", Technical Report Apple Computer Corporation, 1993

10.) Beamforming + Blind Source Separation: see Wang + Brown (chapter 6)

11.) T.D. Sanger, "Neural Population Codes", Curr. Opin. Neurobiol., vol 13(2), 2003

12.) K. Nakadai, D. Matsuura, H. Okuno, H. Tsujino, "Improvement of recognition of simultaneous speech signals using AV integration and scattering theory for humanoid robots", Speech communication 44(1-4), 2004

13.) Z.W. Pylyshyn,"Visual indexes, preconceptual objects, and situated vision", Cognition, no. 1, June 2001

14.) R. Rensink, "Seeing, sensing, and scrutinizing", Vision Research, vol 40, 2000

15.) A. Clark, "Feature-placing and proto objects", Philosophical Psychology, no. 4, December 2004

16.) P33161EP: Evaluating visual proto-objects with respect to different criteria for robot interaction

17.) Claudius Glaeser, Martin Heckmann, Frank Joublin, Christian Goerick, and Horst-Michael Gross, "Joint Estimation of Formant Trajectories via Spectro-Temporal Smoothing and Bayesian Techniques", Proceedings of International Conference on Acoustics, Speech, and Signal Processing (ICASSP), 2007

**Claims**

1. An audio signal processing system, comprising:

   a) one or more sensors for sensing audio signals,
   b.) a module for computing audio signal segments of coherent signal elements,
   c.) at least one compressing module for computing a compressed representation of audio features of each audio signal segment, and
   d.) a module for storing audio proto objects, which are data objects comprising the compressed representation and time information of the associated audio signal segment,

   wherein the at least one compressing module is designed to perform an integration of said audio features over time via a leaky integration so that later samples of the segment have a higher influence on the compressed features in the audio proto object than earlier samples.

2. The system according to claim 1, wherein the audio proto objects are designed to all have the same data size independently of the length of the segment represented by the audio proto object.

3. The system according to claim 1 or 2, wherein the system is designed to group and store in context audio proto objects with similar **features.**

4. The system according to any of the preceding claims, wherein the segment computing module performs the segmentation based on at least one of audio cues like signal energy, and grouping areas with homogeneous audio feature values.

**5.** The system of claim 4, wherein the start, end, or center of gravity positions of different audio proto objects is stored and set in relation to each other in order to predict the next occurrence of an audio proto object.

**6.** The system according to any of the preceding claims, wherein the segment computing module performs the segmentation in the time domain or the spectral domain of the sensed audio signals.

**7.** The system according to any of the preceding claims, wherein the compressing module(s) use one or more of the following audio features:

pitch, formants, binaural or spectral localization cues, RASTA features, HIST features, signal energy.

**8.** The system according to any of the preceding claims, wherein the compressing module(s) use one or more of the following compression techniques:

preferably arithmetic mean values, histogram representations, or activations in cluster centers similar to a neural population code.

**9.** The system according to claim 8,
wherein the compressing module(s) use in addition to standard feature values, also temporal or spectral derivative values of first or higher order.

**10.** The system according to any of the preceding claims,
wherein visual proto objects, generated on the basis of visual sensing, are stored together with the audio proto objects.

**11.** A robot,
having an audio signal processing system according to any of the preceding claims, wherein the robot further more is provided with a computing unit which controls the robot's behavior based on the stored audio proto objects.

**12.** The robot according to claim 11,
where the robot's behavior is controlled depending on the values of individual features or their combinations of the audio proto objects.

**13.** An audio signal processing method,
comprising the steps of:

a) sensing and digitally recording audio signals,
b.) computing audio signal segments of coherent signal elements out of the recorded audio signals,
c.) computing a compressed representation of audio features of each audio signal segment, and
d.) storing audio proto objects, which are data objects comprising the compressed representation and time information of the associated audio signal segment,

wherein the at least one compressing module is designed to perform an integration of said audio features over time via a leaky integration so that later samples of the segment have a higher influence on the compressed features in the audio proto object than earlier samples.

**14.** A computer software program product,
executing a method according to claim 13 when running on a computing device.

**Patentansprüche**

**1.** Audiosignalverarbeitungssystem mit:

a) einem oder mehrere Sensoren zur Erfassung von Audiosignalen,
b.) einem Modul zur Berechnung von Audiosignalsegmenten kohärenter Signalelemente,
c.) mindestens einem Komprimiermodul zur Berechnung einer komprimierten Darstellung von Audiomerkmalen jedes Audiosignalsegments, sowie d.) einem Modul zur Speicherung von Audio-Protoobjekten, die aus die komprimierte Darstellung sowie Zeitinformationen des zugehörigen Audiosignalsegments umfassenden Datenobjekten bestehen,

wobei das mindestens eine Komprimiermodul so ausgeführt ist, dass es eine Integration der Audiomerkmale im Zeitablauf über eine Leckintegration derart durchführt, dass spätere Muster des Segments einen größeren Einfluss auf die komprimierten Merkmale in dem Audio-Protoobjekt haben als frühere Muster.

2.  System gemäß Anspruch 1,
    wobei die Audioprotoobjekte so ausgeführt sind, dass sie unabhängig von der Länge des durch das Audio-Protoobjekt dargestellten Segments alle dieselbe Datengröße aufweisen.

3.  System gemäß Anspruch 1 oder 2,
    wobei das System so ausgeführt ist, dass es Audio-Protoobjekte mit ähnlichen Merkmalen im Zusammenhang gruppiert und speichert.

4.  System gemäß einem der vorhergehenden Ansprüche,
    wobei das Segmentberechnungsmodul die Segmentierung auf der Grundlage von mindestens einem der Audiohinweise wie Signalenergie und der Gruppierungsbereiche mit homogenen Audiomerkmalswerten durchführt.

5.  System gemäß Anspruch 4,
    wobei die Start-, End- oder Schwerpunktpositionen unterschiedlicher Audio-Protoobjekte gespeichert und in Bezug zueinander gesetzt werden, um das nächste Auftreten eines Audioprotoobjektes vorherzusagen.

6.  System gemäß einem der vorhergehenden Ansprüche,
    wobei das Segmentberechnungsmodul die Segmentierung in dem Zeitbereich oder dem Spektralbereich der erfassten Audiosignale durchführt.

7.  System gemäß einem der vorhergehenden Ansprüche,
    wobei das/die Komprimiermodul(e) eines oder mehrere der folgenden Audiomerkmale einsetzt/en:

    Abweichung, Formanten, binaurale oder spektrale Lokalisierungshinweise, RASTA Merkmale, HIST Merkmale, Signalenergie.

8.  System gemäß einem der vorhergehenden Ansprüche,
    wobei das/die Komprimiermodul(e) eines oder mehrere der folgenden Komprimierverfahren einsetzt/en:

    vorzugsweise arithmetische Durchschnittswerte, Histogramm-Darstellungen oder Aktivierungen in Clusterzentren ähnlich einem neuralen Populationscode.

9.  System gemäß Anspruch 8,
    wobei das/die Komprimiermodul(e) zusätzlich zu Standardmerkmalswerten auch zeitliche oder spektrale Ableitungswerte erster oder höherer Ordnung einsetzt/en.

10. System gemäß einem der vorhergehenden Ansprüche,
    wobei visuelle, auf der Grundlage visueller Erfassung erzeugte Protoobjekte zusammen mit den Audio-Protoobjekten gespeichert werden.

11. Roboter
    mit einem Audiosignal-Verarbeitungssystem gemäß einem der vorhergehenden Ansprüche,
    wobei der Roboter weiterhin mit einer Berechnungseinheit versehen ist, die das Verhalten des Roboters aufgrund der gespeicherten Audio-Protoobjekte steuert.

12. Roboter gemäß Anspruch 11,
    wobei das Verhalten des Roboters in Abhängigkeit der Werte einzelner Merkmale oder ihrer Kombinationen aus den Audio-Protoobjekten gesteuert wird.

13. Audiosignal-Verarbeitungsverfahren
    mit den folgenden Schritten:

a) Erfassen und digitales Aufnehmen von Audiosignalen,

b.) Berechnen von Audiosignalsegmenten von kohärenten Signalelementen aus den aufgezeichneten Audiosignalen,

c.) Berechnen einer komprimierten Darstellung von Audiomerkmalen jedes Audiosignalsegments, sowie

d.) Speichern von Audio-Protoobjekten, welche aus die komprimierte Darstellung und Zeitinformationen des zugehörigen Audiosignalsegments umfassenden Datenobjekten bestehen,

wobei das mindestens eine Komprimiermodul so ausgeführt ist, dass es eine Integration dieser Audiomerkmale im Zeitablauf über eine Leckintegration derart durchführt, dass spätere Muster des Segments einen größeren Einfluss auf die komprimierten Merkmale in dem Audioprotoobjekt haben als frühere Muster.

**14.** Computersoftwareprogrammprodukt,
welches, wenn es auf einer Recheneinheit läuft, ein Verfahren gemäß Anspruch 13 ausführt.

## Revendications

**1.** Système de traitement de signal audio, comprenant :

a) un ou plusieurs détecteurs pour détecter des signaux audio,

b) un module pour calculer des segments de signaux audio d'éléments de signaux cohérents,

c) au moins un module de compression pour calculer une représentation compressée des caractéristiques audio de chaque segment de signal audio, et

d) un module pour mémoriser des proto-objets audio, qui sont des objets de données comprenant la représentation compressée et des informations temporelles du segment de signal audio associé,

dans lequel le au moins un module de compression est conçu pour réaliser une intégration desdites caractéristiques audio au fil du temps par l'intermédiaire d'une intégration non étanche de sorte que des échantillons ultérieurs du segment ont une plus grande influence sur les caractéristiques compressées dans le proto-objet audio que des échantillons antérieurs.

**2.** Système selon la revendication 1, dans lequel les proto-objets audio sont conçus pour avoir tous la même dimension de données indépendamment de la longueur du segment représenté par le proto-objet audio.

**3.** Système selon la revendication 1 ou 2, dans lequel le système est conçu pour grouper et mémoriser en contexte des proto-objets audio avec des caractéristiques semblables.

**4.** Système selon l'une quelconque des revendications précédentes, dans lequel le module de calcul de segments réalise la segmentation sur la base d'au moins l'une des indications audio comme l'énergie du signal, et des zones de groupage avec des valeurs de caractéristiques audio homogènes.

**5.** Système selon la revendication 4, dans lequel des positions de début, de fin, ou de centre de gravité de différents proto-objets audio sont mémorisées et mises en relation les unes avec les autres afin de prédire l'occurrence suivante d'un proto-objet audio.

**6.** Système selon l'une quelconque des revendications précédentes, dans lequel le module de calcul de segment réalise la segmentation dans le domaine temporel ou le domaine spectral des signaux audio détectés.

**7.** Système selon l'une quelconque des revendications précédentes, dans lequel le(s) module(s)de compression utilise (nt) une ou plusieurs des caractéristiques audio suivantes : hauteur du son, formants, indications de localisation binauriculaires ou spectrales, caractéristiques RASTA, caractéristiques HIST, énergie du signal.

**8.** Système selon l'une quelconque des revendications précédentes, dans lequel le(s) module(s) de compression utilise(nt) une ou plusieurs des techniques de compression suivantes : de préférence valeurs moyennes arithmétiques, représentations d'histogramme, ou activations en centres groupés semblables à un code de population neuronal.

**9.** Système selon la revendication 8, dans lequel le(s) module(s) de compression utilise(nt) en plus des valeurs de caractéristiques standards, également des valeurs dérivées temporelles ou spectrales de premier ordre ou d'ordre supérieur.

**10.** Système selon l'une quelconque des revendications précédentes, dans lequel des proto-objets visuels, générés sur la base d'une détection visuelle, sont mémorisés ensemble avec les proto-objets audio.

**11.** Robot ayant un système de traitement des signaux audio selon l'une quelconque des revendications précédentes, dans lequel le robot est doté en outre d'une unité de calcul qui commande le comportement du robot basé sur les proto-objets audio mémorisés.

**12.** Robot selon la revendication 11, où le comportement du robot est commandé en fonction des valeurs des différentes caractéristiques ou de leurs combinaisons des proto-objets audio.

**13.** Procédé de traitement des signaux audio, comprenant les étapes de :

a) détection et mémorisation numérique des signaux audio,
b.) calcul des segments de signaux audio d'éléments de signaux cohérents à partir des signaux audio enregistrés,
c.) calcul d'une représentation compressée de caractéristiques audio de chaque segment de signal audio, et
d.) mémorisation des proto-objets audio, qui sont des objets de données comprenant la représentation comprimée et les informations temporelles du segment de signal audio associé,

dans lequel le au moins un module de compression est conçu pour réaliser une intégration desdites caractéristiques audio au fil du temps par l'intermédiaire d'une intégration non étanche de sorte que des échantillons ultérieurs du segment ont une plus grande influence sur les caractéristiques compressées dans le proto-objet audio que des échantillons antérieurs.

**14.** Produit de logiciel informatique exécutant un procédé selon la revendication 13 lorsqu'il tourne sur un dispositif de calcul.

# Figure 1: Audio signal in time domain

# Figure 2: Audio signal in spectro-temporal domain

EP 2 224 425 B1

Figure 3: Segmentation process 1D

Figure 4 : Segmentation process 2D

# Figure 5: Position features in Audio Proto Object

Audio Stream representation

Audio Proto Object representation

# Figure 6:Signal energy over time in Audio Proto Object

Mean value: 310.3

Histogram

Population coding

Histogram of delta Energy

Alternative feature compression methods:

EP 2 224 425 B1

# Fig. 7: General System Graph

EP 2 224 425 B1

# Fig. 8: Sound Localization Example

EP 2 224 425 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **S. Ghaemmaghami.** Audio segmentation and classification based on a selective analysis scheme. *Proceedings 10th International Multimedia Modelling Conference,* 2004, 42-48
- **Jens Blauert.** Spatial Hearing. Press, 1997
- Computational auditory scene analysis. **DeLiang Wang ; Guy J. Brown.** IEEE Press. Wiley & Sons, 2006
- **Albert S. Bregman.** Auditory scene analysis. MIT Press, 1990
- **T. Rodemann ; M. Heckmann ; B. Schoelling ; F. Joublin ; C. Goerick.** Real-time sound localization with a binaural head-system using a biologically-inspired cue-triple mapping. *Proceedings of the International Conference on Intelligent Robots and Systems,* 2006
- **M. Heckmann ; F. Joublin ; C. Goerick.** Combining rate and place information for robust pitch extraction. *Proceedings INTERSPEECH 2007,* 2007, 2765-2768
- **M. Heckmann ; X. Domont ; F. Joublin ; C. Goerick.** A Closer Look on Hierarchical Spectro-Temporal Features (HIST). *Proceedings INTERSPEECH 2008,* 2008
- **H. Hermansky ; N. Morgan.** Rasta processing of speech. *IEEE Trans. Speech and Audio Proc,* 1994, vol. 2 (4), 578-589
- **B. Bolder ; M. Dunn ; M. Gienger ; H. Janssen ; H. Sugiura ; C. Goerick.** Visually Guided Whole Body Interaction. *Proceedings of IEEE Conference on Robotics and Automation,* 2007
- **M. Slaney.** An efficient implementation of the Patterson-Holdsworth auditory filterbank. *Technical Report Apple Computer Corporation,* 1993
- **Wang ; Brown.** Beamforming + Blind Source Separation
- **T.D. Sanger.** Neural Population Codes. *Curr. Opin. Neurobiol.,* 2003, vol. 13 (2
- **K. Nakadai ; D. Matsuura ; H. Okuno ; H. Tsujino.** Improvement of recognition of simultaneous speech signals using AV integration and scattering theory for humanoid robots. *Speech communication,* 2004, vol. 44 (1-4
- **Z.W. Pylyshyn.** Visual indexes, preconceptual objects, and situated vision. *Cognition,* June 2001
- **R. Rensink.** Seeing, sensing, and scrutinizing. *Vision Research,* 2000, vol. 40
- **A. Clark.** Feature-placing and proto objects. *Philosophical Psychology,* December 2004
- **Claudius Glaeser ; Martin Heckmann ; Frank Joublin ; Christian Goerick ; Horst-Michael Gross.** Joint Estimation of Formant Trajectories via Spectro-Temporal Smoothing and Bayesian Techniques. *Proceedings of International Conference on Acoustics, Speech, and Signal Processing,* 2007